# EUROPÄISCHE PATENTANMELDUNG

(11) **EP 3 121 775 A1**
(43) Veröffentlichungstag der Anmeldung: **25.01.2017**
(21) Anmeldenummer: 16179903.6
(22) Anmeldetag: 18.07.2016
(51) Int. Cl.: G06Q 10/08

(54) **VERFAHREN, VERTEILERFAHRZEUG UND SYSTEM ZUM AUTONOMEN ABLIEFERN UND/ODER ABHOLEN WENIGSTENS EINER SENDUNG**

(30) Priorität: 22.07.2015 DE 102015111888
(71) Anmelder: Deutsche Post AG, 53113 Bonn (DE)
(72) Erfinder: Wiechers, Ralph, 53508 Mayschoß (DE)
(74) Vertreter: Cohausz & Florack

(57) **Zusammenfassung**

Es wird ein Verfahren zum autonomen Abliefern und/oder Abholen wenigstens einer Sendung (1) mit wenigstens einem Verteilerfahrzeug (2) beschrieben,
- bei dem ein Verteilerfahrzeug (2) wenigstens teilweise autonom und wenigstens teilweise über den öffentlichen Straßenverkehr (5) an ein Kundenfahrzeug (4) heranfährt,
- bei dem das Verteilerfahrzeug (2) wenigstens teilweise autonom das Öffnen einer Verschlusseinheit (8) des Kundenfahrzeugs (4) bewirkt,
- bei dem das Verteilerfahrzeug (2) bei geöffneter Verschlusseinheit (8) wenigstens teilweise autonom eine Sendung (1) in das Kundenfahrzeug (4) verbringt und/oder wenigstens teilweise autonom eine Sendung (1) aus dem Kundenfahrzeug (4) entnimmt,
- bei dem das Verteilerfahrzeug nach dem Verbringen und/oder Entnehmen der Sendung wenigstens teilweise autonom das Schließen der Verschlusseinheit (8) des Kundenfahrzeugs bewirkt.

## Beschreibung

### Gebiet

Die Erfindung betrifft ein Verfahren zum autonomen Abliefern und/oder Abholen wenigstens einer Sendung mit wenigstens einem Verteilerfahrzeug, ein Verteilerfahrzeug zur Durchführung des Verfahrens und ein Verteilersystem zur Durchführung des Verfahrens.

### Hintergrund

Es sind bereits Verfahren zum autonomen Abliefern und/oder Abholen wenigstens einer Sendung mit wenigstens einem Verteilerfahrzeug, sowie entsprechende Verteilerfahrzeuge und Verteilersysteme beschrieben worden, und zwar für recht unterschiedliche Sendungen. Auf diese Weise ist es möglich, Personal und die damit verbundenen Kosten einzusparen. Da kein Personal für das Fahren der Verteilerfahrzeuge benötigt wird, kann in einem bestimmten räumlichen Gebiet eine größere Anzahl kleinerer Verteilerfahrzeuge eingesetzt und eine größere Anzahl von Logistikzentren genutzt werden, die von den Verteilerfahrzeugen zur Übernahme und/oder zur Abgabe von Sendungen angefahren werden können. Dies kann helfen, unnötige Wege einzusparen und Sendungen schneller zu übergeben. Auch können die Übergabezeiten individueller an die Adressaten der Sendungen oder der Sendungen verschickenden Personen angepasst werden. Auf diese Weise soll beispielsweise die Wahrscheinlichkeit erhöht werden, die entsprechenden Personen zu Hause anzutreffen, um den Komfort für die Personen zu erhöhen und unnötige Transportwege zu vermeiden.

Nachteilig an den bekannten Verfahren ist jedoch, dass diese einen erheblichen regelungstechnischen Aufwand, eine Vielzahl von Verteilerfahrzeugen und/oder ein verzweigtes Netz von Logistikzentren erfordern.

### Zusammenfassung einiger beispielhafter Ausführungsformen der Erfindung

Der vorliegenden Erfindung liegt die Aufgabe zugrunde, das Verfahren, das Verteilerfahrzeug und das Verteilersystem jeweils der eingangs genannten und zuvor näher beschriebenen Art derart auszugestalten und weiterzubilden, dass Sendungen einfacher und für die Kunden komfortabler abgeliefert und/oder abgeholt werden können.

Diese Aufgabe ist nach Anspruch 1 durch ein Verfahren zum autonomen Abliefern und/oder Abholen wenigstens einer Sendung mit wenigstens einem Verteilerfahrzeug gelöst,
- bei dem ein Verteilerfahrzeug wenigstens teilweise autonom und wenigstens teilweise über den öffentlichen Straßenverkehr an ein Kundenfahrzeug heranfährt,
- bei dem das Verteilerfahrzeug wenigstens teilweise autonom das Öffnen einer Verschlusseinheit des Kundenfahrzeugs bewirkt,
- bei dem das Verteilerfahrzeug bei geöffneter Verschlusseinheit wenigstens teilweise autonom eine Sendung in das Kundenfahrzeug verbringt und/oder wenigstens teilweise autonom eine Sendung aus dem Fahrzeug entnimmt,
- bei dem das Verteilerfahrzeug nach dem Verbringen und/oder Entnehmen der Sendung wenigstens teilweise autonom das Schließen der Verschlusseinheit des Kundenfahrzeugs bewirkt.

Die Erfindung hat erkannt, dass auf einen direkten Kundenkontakt beim Abholen und/oder Abliefern von Sendungen verzichtet werden kann. Werden stattdessen Kundenfahrzeuge genutzt, um das Abholen und/oder Abliefern von Sendungen zu bewirken, kann eine erhebliche Vereinfachung und Komfortsteigerung erreicht werden. Es ist dann nämlich nicht erforderlich den entsprechenden Kunden zu Hause zu treffen, um die Übergabe der Sendung zu bewirken. Vielmehr kann die Übergabe der Sendung dort erfolgen, wo sich das Kundenfahrzeug befindet. Dies kann bedarfsweise im Wesentlichen unabhängig vom konkreten Aufenthaltsort des Kunden bewirkt werden. Allerdings kann der Kunde sich sehr wohl im Kundenfahrzeug befinden. Befindet sich der Kunde nicht im Kundenfahrzeug und hat das Kundenfahrzeug geparkt, erlaubt die Verwendung des Kundenfahrzeugs zur Ablieferung und/oder Abholung der Sendung den weiteren Vorteil, dass der Kunde meist ohnehin bald wieder zum Kundenfahrzeug zurückkehrt. Es werden also unnötige Wege eingespart. Außerdem gelangt der Kunde auf diese Weise schneller in den Besitz der Sendung, als wenn er die Sendung zu Hause entgegennehmen oder gar in einer Filiale eines die Sendung transportierenden Unternehmens abholen müsste. Dies stellt für den Kunden insbesondere bei eiligen Sendungen einen erheblichen Komfortgewinn dar, was umso mehr gilt, wenn sich der Kunde während der Übergabe der Sendung im Kundenfahrzeug befindet.

Wenn das Kundenfahrzeug von dem Verteilerfahrzeug leichter zu erreichen ist als der Kunde selbst, der beispielsweise unterwegs oder beschäftigt sein kann, während das Kundenfahrzeug über längere Zeit an einem bestimmten Ort geparkt ist, sind für das Abliefern und/oder das Abholen von Sendungen in einem größeren räumlichen Gebiet grundsätzlich sehr wenig Verteilerfahrzeuge und sehr wenig Logistikzentren erforderlich. Es reichen also weniger Verteilerfahrzeuge aus, die mehr Sendungen aufnehmen können, um nacheinander eine ganze Reihe von Kundenfahrzeugen anzufahren. Dies senkt die Komplexität des Verfahrens und damit auch dessen Kosten.

Die dagegen notwendige Technologie zum Abliefern einer Sendung in ein Kundenfahrzeug und/oder zum Abholen einer Sendung aus einem Kundenfahrzeug ist vor dem Hintergrund der ohnehin notwendigen Technologie und insbesondere vor dem Hintergrund der mit der Erfindung einhergehenden Vereinfachung und Komfortsteigerung nicht von nennenswerter Bedeutung.

Bei der Sendung kann es sich grundsätzlich um sehr unterschiedliche Gegenstände handeln, die unterschiedliche Formen, Größen und Gewichte aufweisen können. Vorzugsweise sind die Sendungen mit überschaubarem Aufwand zu transportieren und insbesondere von einer Person ohne größere Probleme über wenigstens eine kurze Distanz zu tragen. Bei der wenigstens einen Sendung kann es sich etwa um einen Gegenstand in Form eines Stückguts oder eines umverpackten Guts, wie etwa eines verpackten Schüttguts, handeln. Insbesondere können die Sendungen Gegenstände des täglichen Bedarfs, wie Verbrauchsmaterialien oder Lebensmittel, sowie technische Gegenstände und Gerätschaften sein. Insbesondere handelt es sich in diesem Zusammenhang um personenbezogene Sendungen, die für bestimmte Personen gedacht bzw. an bestimmte Personen adressiert sind. Personenbezogene Sendungen sollen daher vorzugsweise nicht in die Hände von nicht zur Entgegennahme der personenbezogenen Sendungen berechtigte Personen gelangen.

Ganz grundsätzlich kann es sich bei der wenigstens einen Sendung bevorzugt um eine Briefsendung, Paketsendung und/oder Flyer handeln. Ein Flyer kann dabei bedarfsweise auch eine Broschüre, eine Zeitschrift und/oder ein Prospekt sein, während eine Paketsendung neben einem Paket auch ein Päckchen sein kann. Zudem kann eine Briefsendung neben einem Brief auch eine Postkarte sein. Besonders bevorzugt handelt es sich bei der wenigstens einen Sendung jedoch um eine Sendung, die nicht ohne Weiteres in einen gebräuchlichen Briefkasten eingesteckt werden kann, da dann die Vorteile des Verfahrens und der Übergabeeinrichtung besonders zum Tragen kommen. Kleine personenbezogene Sendungen wie etwa Briefsendungen erfordern keine unmittelbare Übergabe, sondern können einfach im Briefkasten des Adressaten hinterlegt werden, der die Briefsendung zu einem späteren Zeitpunkt aus dem Briefkasten entnehmen kann. Allerdings kann es dennoch zweckmäßig sein, wenn die Sendung im Sinne der Erfindung eine Briefsendung ist, etwa wenn der Adressat oder eine berechtigte Person dadurch früher in den Besitz der Sendung gelangt. Alternativ oder zusätzlich können aber auch unnötige Transportwege eingespart werden, wenn die Briefsendung nicht in den Briefkasten des Adressaten eingebracht, sondern in das Kundenfahrzeug verbracht wird. Die vorgenannten Vorteile kommen aber grundsätzlich insbesondere bei größeren Sendungen, beispielsweise Paketsendungen, zur Geltung, da der Transport und das Handling größerer Sendungen grundsätzlich aufwendiger sind.

Bei dem Kundenfahrzeug handelt es sich vorzugsweise um einen Personenkraftwagen oder einen Kleinlaster. Es kann sich aber auch um ein Quad oder ein Zweirad, etwa Fahrrad, Motorrad oder Roller handeln. Grundsätzlich kommt auch ein Anhänger, ein Boot oder ein Flugzeug in Frage.
Verfahrensmäßig kann eine Sendung sowohl abgeliefert als auch abgeholt werden. Das Abliefern dient dabei grundsätzlich dem Zweck, dass der Kunde in den Besitz der Sendung gelangt. Dabei kann der Kunde bedarfsweise der Adressat der Sendung, der Fahrer des Kundenfahrzeugs oder eine andere Person sein, die nach dem Verbringen der Sendung in das Kundenfahrzeug in den Besitz der Sendung gelangt, auch wenn dazu eine weitere Übergabe der Sendung erforderlich sein sollte. Das Abholen der Sendung dient dagegen dem Zweck, die Sendung zum Adressaten oder einer mit dem Adressaten verbunden, insbesondere zur Entgegennahme der Sendung berechtigten, Person und/oder in ein weiteres Kundenfahrzeug zu befördern.

Um eine Sendung abzuliefern und/oder abzuholen fährt das Verteilerfahrzeug wenigstens teilweise über den öffentlichen Straßenverkehr, um sich einem Kundenfahrzeug zu nähern. Das vorliegend beschriebene Verfahren dient also nicht dem Transport von Sendungen in einem vom öffentlichen Straßenverkehr abgeschirmten Bereich, sondern einem Transport von Sendungen über eine größere Distanz, die effizient nur unter Ausnutzung des öffentlichen Straßenverkehrs, nämlich dem parallel von anderen Verkehrsteilnehmern genutzten öffentlichen Straßennetz. Das Verteilerfahrzeug fährt zudem wenigstens teilweise autonom, wobei es besonders bevorzugt ist, wenn das Verteilerfahrzeug auch wenigstens teilweise im öffentlichen Straßenverkehr autonom fährt. Unter einem autonomen Fahren wird dabei ein Fahren verstanden, das ohne Eingriff eines Fahrers auskommt, selbst wenn ein Fahrer im Verteilerfahrzeug vorhanden ist, jedenfalls solange der Fahrer nur überwachend tätig wird. Das Verteilerfahrzeug kann also neben dem autonomen Fahren bedarfsweise auch für das konventionelle Fahren durch einen Fahrer ausgestattet sein, um das Verteilerfahrzeug flexibler einsetzen zu können.

Besonders bevorzugt, weil viel einfacher und kostengünstiger in der Umsetzung, ist es, wenn das Verteilerfahrzeug wenigstens im Wesentlichen ausschließlich autonom bewegt wird und insbesondere wenn auf einen Fahrer verzichtet wird. Alternativ oder zusätzlich kann eine Vereinfachung erreicht werden, wenn das Verteilerfahrzeug wenigstens zu einem stark überwiegenden Anteil, beispielsweise wenigstens 80%, insbesondere wenigstens 90%, weiter insbesondere wenigstens 95%, durch den öffentlichen Straßenverkehr zu dem Kundenfahrzeug fährt, und zwar bedarfsweise autonom.

Beim Kundenfahrzeug angekommen, bewirkt das Verteilerfahrzeug in einer wenigstens teilweise autonomen Weise das Öffnen einer Verschlusseinheit des Kundenfahrzeugs. Das Öffnen ist dabei insoweit autonom, dass es ohne ein Eingreifen einer Bedienperson erfolgt. Daher ist es auch besonders bevorzugt, wenn das Öffnen vollständig autonom erfolgt. Vorbereitende Handlungen seitens des Kunden können jedoch weiter bevorzugt sein. Die Verschlusseinheit verschließt vorzugsweis eine Öffnung des Kundenfahrzeugs. Dabei schränkt die Verschlusseinheit insbesondere den Zugang in das Kundenfahrzeug durch die Öffnung ein, etwa indem die Verschlusseinheit im geschlossenen Zustand wenigstens teilweise vor der Öffnung angeordnet ist. Je nach Ausgestaltung der Verschlusseinheit, kann die Öffnung des Kundenfahrzeugs durch die Verschlusseinheit in der geschlossenen Stellung mehr oder weniger vollständig verschlossen sein. Ein wenigstens im Wesentlichen vollständiges Verschließen wird dabei in vielen Fällen bevorzugt sein, etwa um das Eindringen von Schmutz in das Kundenfahrzeug zu vermeiden. Die durch die Verschlusseinheit wenigstens teilweise verschlossene Öffnung bietet in der geöffneten Stellung der Verschlusseinheit Zugangs zu wenigstens einem Innenraum des Kundenfahrzeugs. Der Innenraum kann beispielsweise ein Laderaum, ein Kofferraum, eine Ladebox, und/oder ein Fahrgastraum sein. Besonders bevorzugt handelt es sich bei der Verschlusseinheit um eine Tür, etwa eine Seitentür oder eine Tür eines Laderaums, Insbesondere Hecktür, beispielsweise im Sinne einer Heckklappe oder eines Kofferraumdeckels. Dies gilt insbesondere aber nicht ausschließlich dann, wenn es sich bei dem Kundenfahrzeug um ein Automobil, wie einen Personenkraftwagen oder einen Kleinlaster, handelt. Dies hat den Vorteil, dass auch größere Sendungen in das Kundenfahrzeug verbracht werden können, insbesondere ohne dessen anderweitige Nutzung zu beeinträchtigen. Insbesondere im Falle von Zweirädern, Quads, Booten oder Pickups kommen aber auch Verschlusseinheiten beispielsweise in Form von Türen, Klappen oder Deckel von Ladeboxen in Frage, die an, auf oder in dem Fahrzeug zur Aufnahme vorgesehen sind. Verschlusseinheiten können grundsätzlich auch Schieber, Rolltore oder dergleichen sein. Bedarfsweise kann die Verschlusseinheit nach Art einer Kamerablende ausgebildet sein, etwa eine Mehrzahl gegeneinander verschiebbarer Lamellen umfassen. Dabei ist anzumerken, dass das Öffnen von dem Verteilerfahrzeug lediglich wenigstens teilweise bewirkt werden soll. Es ist dabei nicht erforderlich, dass das Verteilerfahrzeug die wenigstens eine Verschlusseinheit des Kundenfahrzeugs auch tatsächlich selbst öffnet. Das Öffnen kann anderweitig erfolgen. Das Bewirken, beispielsweise das Initiieren des Öffnens, wird jedoch durch das Verteilerfahrzeug durchgeführt. Bedarfsweise kann das Bewirken des Öffnens auch so verstanden werden, dass das gesamte Öffnen der Verschlusseinheit oder wenigstens Teile davon umfasst sind.

Bei geöffneter Verschlusseinheit verbringt das Verteilerfahrzeug anschließend wenigstens eine Sendung in das Kundenfahrzeug. Alternativ oder zusätzlich kann das Verteilerfahrzeug auch eine Sendung aus dem Kundenfahrzeug entnehmen. Das Verbringen und/oder Entnehmen kann bevorzugt durch eine bei geöffneter Verschlusseinheit wenigstens teilweise freigegebenen Öffnung des Kundenfahrzeugs erfolgen. Je nach Ausgestaltung der Verschlusseinheit kann das Verbringen und/oder Entnehmen alternativ oder zusätzlich auch durch die geöffnete Verschlusseinheit erfolgen. Bedarfsweise können das Verbringen und das Entnehmen von Sendungen gleichzeitig oder nacheinander erfolgen. Einfacher wird es aber regelmäßig sein, wenn das Verbringen und das Entnehmen der Sendungen nacheinander erfolgen. Ebenso kann sich das Verteilerfahrzeug zum Verbringen und zum Entnehmen von Sendungen des gleichen Mittels oder aber unterschiedlicher Mittel bedienen. Ersteres kann zumindest den apparativen Aufwand verringern. Verfahrensmäßig erfolgt das Verbringen und/oder das Entnehmen einer Sendung wenigstens teilweise autonom, also ohne ein Eingreifen einer Person. Um eine Person im Zusammenhang mit den Verbringen und dem Entnehmen von Sendungen entbehrlich zumachen, um das Verfahren zu vereinfachen und kostengünstiger zu gestalten, können das Verbringen und das Entnehmen von Sendungen bedarfsweise wenigstens im Wesentlichen vollständig autonom erfolgen.

Damit unberechtigte Personen keinen oder jedenfalls nur einen erheblich eingeschränkten Zugang zum Kundenfahrzeug erhalten, wird die Verschlusseinheit nach dem Verbringen der Sendung in das Kundenfahrzeug und/oder nach dem Entnehmen der Sendung aus dem Kundenfahrzeug wieder geschlossen. Auch dies wird von dem Verteilerfahrzeug wenigstes bewirkt, ohne dass das Schließen tatsächlich auch von dem Verteilerfahrzeug durchgeführt werden muss. Das Bewirken des Schließens führt jedoch dazu, dass das Schließen der Verschlusseinheit durchgeführt wird. Das Bewirken kann daher beispielsweise auch nur als Initiieren oder Auslösen des Schließens der Verschlusseinheit des Kundenfahrzeugs verstanden werden. Bedarfsweise kann das Bewirken aber auch das vollständige Schließen oder wenigstens Teile davon umfassen. Im Übrigen erfolgt das Bewirken des Schließens wenigstens teilweise autonom, also ohne Eingreifen einer Person. Dabei ist es wiederum besonders einfach und effektiv, wenn es sich um ein wenigstens im Wesentlichen vollständig autonomes Bewirken des Schließens der Verschlusseinheit handelt, da dann wenigstens im Wesentlichen vollständig auf das Eingreifen einer Person verzichtet werden kann. Dies vereinfacht das Verfahren und senkt dessen Kosten.

Die zuvor genannte Aufgabe ist ferner gemäß Anspruch 15 durch ein Verteilerfahrzeug zur Durchführung des Verfahrens nach einem der Ansprüche 1 bis 14 gelöst. Dabei werden grundsätzlich die zuvor bereits im Zusammenhang mit dem Verfahren beschriebenen Vorteile erreicht.

Zudem ist die eingangs genannte Aufgabe gemäß Anspruch 16 durch ein Verteilersystem zur Durchführung des Verfahrens nach einem der Ansprüche 1 bis 14 umfassend wenigstens ein Verteilerfahrzeug nach Anspruch 15 und wenigstens eine Fernsteuervorrichtung und/oder wenigstens eine Leiteinheit gelöst. Auch dies dient dazu, die bereits zuvor im Zusammenhang mit dem Verfahren stehenden Vorteile zu erreichen.

Bei einer ersten besonders bevorzugten Ausgestaltung des Verfahrens fährt das Verteilerfahrzeug nach dem Schließen der Verschlusseinheit des Kundenfahrzeugs wenigstens teilweise autonom und wenigstens teilweise über den öffentlichen Straßenverkehr zu wenigstens einem weiteren Kundenfahrzeug. Das Verteilerfahrzeug kann also nacheinander unterschiedliche Kundenfahrzeuge zur Übergabe und/oder Entgegennahme von Sendungen anfahren. Dies verringert die pro Sendung anfallenden Kosten des Verfahrens. Das Verteilerfahrzeug kann also eine Tour fahren und dabei Sendungen an eine Reihe von Kundenfahrzeugen übergeben und/oder von einer Reihe von Kundenfahrzeugen Sendungen empfangen. Das Be- und Entladen des Verteilerfahrzeugs kann dabei an Logistikzentren erfolgen, wobei dann bedarfsweise Personen beteiligt sind. Die Abfertigung des Verteilerfahrzeugs an einem Logistikzentrum muss also nicht autonom erfolgen. Dies kann aber dennoch der Fall sein. An dem wenigstens einen weiteren Kundenfahrzeug angekommen kann das Verteilerfahrzeug wenigstens eine Sendung in das weitere Kundenfahrzeug verbringen und/oder aus dem weiteren Kundenfahrzeug entnehmen. Auch dies geschieht wenigstens teilweise autonom, wobei eine wenigstens im Wesentlichen vollständige Autonomie grundsätzlich besonders bevorzugt ist. Auch bei dem wenigstens einen weiteren Kundenfahrzeug kann durch das Verteilerfahrzeug das Öffnen und/oder das Schließen einer Verschlusseinheit wenigstens teilweise autonom bewirkt werden, was zudem bevorzugt sein wird, um unberechtigten Personen keinen Zugang zum Inneren des Kundenfahrzeugs einzuräumen.

Alternativ oder zusätzlich kann es zweckdienlich sein, wenn das Verteilerfahrzeug vor dem Öffnen der Verschlusseinheit des Kundenfahrzeugs wenigstens teilweise autonom das Entriegeln und/oder nach dem Schließen der Verschlusseinheit des Kundenfahrzeugs das Verriegeln der Verschlusseinheit bewirkt. Dadurch soll insbesondere vermieden werden, dass die Verschlusseinheit vor und/oder nach dem Verbringen der Sendung in das Kundenfahrzeug und/oder dem Entnehmen der Sendung aus dem Kundenfahrzeug von unbefugten Personen geöffnet werden kann. Vor dem Eintreffen des Verteilerfahrzeugs am Kundenfahrzeug und/oder nachdem das Verteilerfahrzeug das Kundenfahrzeug verlassen hat, ist die Verschlusseinheit verriegelt, wie dies bei einem abgestellten Kundenfahrzeug grundsätzlich zweckdienlich ist.

Das Verteilerfahrzeug weist zum sicheren Verbringen und/oder Entgegennehmen von Sendungen, die unterschiedliche Formen und Größen haben können, eine geeignete Transporteinheit auf, die den Transport der Sendung von dem Verteilerfahrzeug, insbesondere von einem Laderaum des Verteilerfahrzeugs in das Kundenfahrzeug und/oder den Transport der Sendung von dem Kundenfahrzeug in das Verteilerfahrzeug, insbesondere in einen Laderaum des Verteilerfahrzeugs, bewerkstelligt. Dazu kommen unterschiedliche Transporteinheiten in Frage. Allerdings kann ein Greifarm, insbesondere mit einer Mehrzahl von Gelenken, besonders bevorzugt sein, um das Abholen und/oder Abliefern unterschiedlicher Sendungen aus/in unterschiedliche Kundenfahrzeuge zuverlässig bewerkstelligen zu können. Der Greifabschnitt des Greifarms kann so ausgebildet sein, dass der Greifabschnitt unterschiedlich große Sendungen in unterschiedlichen Ausrichtungen und bei geringer Flächenpressung im Kontaktbereich zwischen dem Greifabschnitt und der Sendung halten kann.

Eine weitere bevorzugte Ausgestaltung des Verfahrens sieht vor, dass das wenigstens eine Kundenfahrzeug auf einem Parkplatz, vorzugsweise öffentlichen Parkplatz, Privatparkplatz und/oder Firmenparkplatz, abgestellt ist. Im Falle eine Boots entspricht der Parkplatz im Sinne der Erfindung eher einem Liegeplatz im allgemeinen Sinne. Bei einem Fahrzeug, insbesondere Flugzeug kann der Begriff ebenfalls sehr weit etwa auch im Sinne eines Hangars verstanden werden. Der einfacheren Verständlichkeit halber wird vorliegend aber weiter der Begriff Parkplatz verwendet, ohne jeweils im Einzelnen eine Unterscheidung hinsichtlich des jeweiligen Fahrzeugs vorzunehmen. Dies ist aus deshalb zweckdienlich, weil Parkplätze im üblichen Sinne grundsätzlich bevorzugt sein dürften. Das Kundenfahrzeug ist auf einem Parkplatz, insbesondere einem öffentlichen Parkplatz, Privatparkplatz und/oder Firmenparkplatz, meist ohnehin über einen längeren Zeitraum geparkt, so dass für das Verteilerfahrzeug genügend Zeit zur Verfügung steht, um sich währenddessen zum Kundenfahrzeug zu bewegen und die wenigstens eine Sendung in das Kundenfahrzeug zu verbringen und/oder aus dem Kundenfahrzeug zu entnehmen. Darüber hinaus sind Parkplätze, wie insbesondere öffentliche Parkplätze, Privatparkplätze und/oder Firmenparkplätze, typischerweise problemlos für das Verteilerfahrzeug zugänglich. Einerseits können entsprechende Parklätze leicht über den öffentlichen Straßenverkehr erreicht werden. Andererseits kann auch für das Verteilerfahrzeug eine Zugangsberechtigung zu dem Parkplatz erhalten werden. Bedarfsweise ist es dabei erforderlich oder wünschenswert, dass das Verteilerfahrzeug über eine Zugangsberechtigung und ein Zugangsbewirkungsmittel zum Bewirken des Zugangs zu dem Parkplatz verfügt. Die Zugangsberechtigung kann mit dem Zugangsberechtigungsmittel verknüpft sein, etwa in Form eines Schlüssels. Es kann aber auch, und zwar bevorzugt so sein, dass die Zugangsberechtigung auf einem Träger gespeichert ist. Dies kann eine Karte sein, die zur Speicherung der Zugangsberechtigung einen Magnetstreifen oder einen Chip aufweist. Es kann aber auch ein Radio Frequency Identification (RFID) Tag und/oder Near Field Communication (NFC) Tag mit der Zugangsberechtigung versehen sein. Die Zugangsberechtigung kann dann von einer Zugangseinrichtung des Parkplatzes ausgelesen werden. Nach einer erfolgreichen Berechtigungsprüfung anhand der Zugangsberechtigung kann die Zugangseinrichtung den Zugang zum Parkplatz freigeben. Es kann aber alternativ oder zusätzlich vorgesehen sein, dass die Zugangsberechtigung mittels eines Zugangsberechtigungsmittels an die Zugangseinrichtung des Parkplatzes gesendet wird. Dies kann über ein lokales Funknetz oder ein Mobilfunknetz erfolgen. In diesem Zusammenhang können besonders einfach und zuverlässig Bluetooth, Wireless Local Area Network (WLAN), Global System for Mobile Communication (GSM), Universal Mobile Telecommunications System (UMTS) und/oder Long Term Evolution (LTE) genutzt werden. Auch in diesem Fall kann die Zugangseinrichtung den Zugang zum Parkplatz nach erfolgreicher Berechtigungsprüfung freigeben. Über die Verwendung der Zugangsberechtigung wird beispielsweise sichergestellt, dass das Verteilerfahrzeug, aber keine beliebigen anderen Fahrzeuge Zugang zu dem Parkplatz erhalten. Dies verhindert das Parken unberechtigter Personen und dient auch der Sicherheit der Kundenfahrzeuge während des Parkens.

Das Verteilerfahrzeug kann das Entriegeln, Öffnen, Schließen und/oder Verriegeln der Verschlusseinheit des Kundenfahrzeugs einfach und zugleich zuverlässig bewirken, wenn das Verteilerfahrzeug zu diesem Zweck wenigstens eine Steuerinformation an eine Steuervorrichtung des Kundenfahrzeugs sendet, wobei dann die Steuervorrichtung des Kundenfahrzeugs infolge des Empfangs und der Verarbeitung der wenigstens einen Steuerinformation ein Entriegeln, Öffnen, Schließen und/oder Verriegeln der Verschlusseinheit bewirkt. Das Entriegeln, Öffnen, Schließen und/oder Verriegeln der Verschlusseinheit des Kundenfahrzeugs kann dann praktisch vom Kundenfahrzeug und den darin verbauten Einrichtungen selbst durchgeführt werden. Diese Funktionalität wird aber zuverlässig von außen über das Verteilerfahrzeug mittels der Steuerinformation ausgelöst und bedarfsweise auch überwacht. Die Steuerinformation kann dabei von einem Steuermittel des Verteilerfahrzeugs gesendet werden. Moderne Fahrzeuge verfügen über immer mehr Steuerungstechnik und motorische Unterstützungen, die es erlauben, mehr und mehr Funktionen ohne händischen Eingriff durchführen zu können. Der Fahrer muss lediglich die Anweisung geben, dass die entsprechende Funktion ausgeführt werden soll. Dies geschieht etwa über einen Tastendruck oder eine Einstellung am Fahrzeug. Die Verarbeitung der Anweisung erfolgt dann zunächst elektrisch, so dass die Anweisung grundsätzlich auch von außen, etwa vom Verteilerfahrzeug kommen kann, sofern eine entsprechende Schnittstelle vorhanden ist. Entsprechende Schnittstellen sind grundsätzlich bekannt und verfügbar.

Alternativ oder zusätzlich kann das Entriegeln, Öffnen, Schließen und/oder Verriegeln der Verschlusseinheit des Kundenfahrzeugs aber auch auf andere Art und Weise erfolgen. Dies ist beispielsweise dann von Vorteil, wenn das Kundenfahrzeug keine Steuervorrichtung umfasst, über die mittels einer Steuerinformation ein Entriegeln, Öffnen, Schließen und/oder Verriegeln der Verschlusseinheit des Kundenfahrzeugs bewirkt werden kann. In diesem Fall kann eine Bedieneinheit zum Bedienen der Verschlusseinheit beispielsweise in Kontakt mit der Verschlusseinheit des Kundenfahrzeugs und/oder mit einem Öffnungsabschnitt des Kundenfahrzeugs gebracht werden, der mit dem Öffnen der Verschlusseinheit in Verbindung steht. Dabei ist vorgesehen, dass die Bedieneinheit beispielsweise durch den Kontakt mit der Verschlusseinheit und/oder dem Öffnungsabschnitt das Entriegeln, Öffnen, Schließen und/oder Verriegeln der Verschlusseinheit bewirkt. Dies kann grundsätzlich auf unterschiedliche Weise erfolgen. Beispielsweise können das Entriegeln und Verriegeln durch eine Berührung des Fahrzeugs erfolgen. Es kann auch das Öffnen einer Heckklappe durch ein Untergreifen der Stoßstange, etwa mit dem Fuß, ausgelöst werden. Zudem kann eine Heckklappe beispielsweis durch das Betätigen eines Knopfs an der Heckklappe ausgelöst werden. Diese Auslösehandlungen zum Bewirken eines Entriegelns, Öffnens, Schließens und/oder Verriegelns der Verschlusseinheit des Kundenfahrzeugs kann bedarfsweise auch von dem Verteilerfahrzeug durchgeführt werden. Bedarfsweise muss das Verteilerfahrzeug mit entsprechenden Mitteln ausgerüstet werden. Alternativ oder zusätzlich kann das Verteilerfahrzeug auch das Entriegeln, Öffnen, Schließen und/oder Verriegeln der Verschlusseinheit des Kundenfahrzeugs selbst übernehmen. Das Entriegeln kann dann beispielsweise durch Aufschließen mit einer Art Schlüssel erfolgen, während das Öffnen beispielsweisedurch Drücken eines Tasters, Drücken eines Knopfes und/oder Aufschwenken der Verschlusseinheit, insbesondere Tür, erfolgen kann. Das Schließen kann bedarfsweise durch Drücken eines Tasters, Drücken eines Knopfes und/oder Zurückschwenken der Verschlusseinheit, insbesondere im Falle einer Tür, erfolgen. Das Verriegeln kann alternativ oder zusätzlich beispielsweise durch eine Art Schlüssel, Drücken eines Tasters und/oder Drücken eines Knopfes erfolgen. Anders ausgedrückt kann das Handling der Verschlusseinheit zum Entriegeln, Öffnen, Schließen und/oder Verriegeln durch den Fahrer durch das Verteilerfahrzeug nachgeahmt werden.

Das direkte Kommunizieren von Verteilerfahrzeug und Steuervorrichtung des Kundenfahrzeugs kann unter Umständen aufwendig sein oder ein Sicherheitsrisiko darstellen. Dies kann dann bedarfsweise umgangen werden, indem das Verteilerfahrzeug wenigstens eine Fernsteuerinformation an eine Fernsteuervorrichtung sendet. Die Fernsteuerinformation kann ebenfalls von einem Steuermittel des Verteilerfahrzeugs gesendet werden. Infolge des Empfangs und der Verarbeitung der wenigstens einen Fernsteuerinformation sendet die Fernsteuervorrichtung wenigstens eine Fernaktivierungsinformation an die Steuervorrichtung des Kundenfahrzeugs, wobei dann die Steuervorrichtung des Kundenfahrzeugs infolge des Empfangs und der Verarbeitung der wenigstens einen Fernaktivierungsinformation ein Entriegeln, Öffnen, Schließen und/oder Verriegeln der Verschlusseinheit bewirkt. Dabei handelt es sich bei der Fernsteuervorrichtung besonders bevorzugt um eine eine Vielzahl von Fahrzeugen bzw. Steuervorrichtungen fernsteuernde Fernsteuervorrichtung. Fernsteuervorrichtungen können beispielsweise von Automobilherstellern oder von Fahrzeugflotten steuernden Einheiten betrieben werden. Diese können Mittel und Technologien bereitstellen, die unwirtschaftlicher genutzt werden könnten, müssten sie separat in jedem einzelnen Fahrzeug vorgesehen werden.

Um ein unberechtigtes Entriegeln, Öffnen, Schließen und/oder Verriegeln der Verschlusseinheit des Kundenfahrzeugs zu vermeiden, kann die Fernsteuervorrichtung etwa anhand der Fernsteuerinformation eine Berechtigungsprüfung durchführen. Das Bewirken des Entriegelns, Öffnens, Schließens und/oder Verriegelns der Verschlusseinheit kann dann an die Voraussetzung geknüpft werden, dass die Berechtigungsprüfung positiv verlaufen ist, also eine Berechtigung festgestellt worden ist. Alternativ oder zusätzlich kann die Berechtigungsprüfung aber auch von der Steuervorrichtung des Kundenfahrzeugs durchgeführt werden, und zwar insbesondere anhand der Steuerinformation vom Verteilerfahrzeug und/oder anhand der Fernaktivierungsinformation von der Fernsteuervorrichtung. Auch dann kann ein positiver Abschluss der Berechtigungsprüfung als Voraussetzung des Bewirkens eines Entriegelns, Öffnens, Schließens und/oder Verriegelns der Verschlusseinheit des Kundenfahrzeugs herangezogen werden. Die Art der zu diesem Zweck mitgeteilten Berechtigungsinformation und die Art der Berechtigungsprüfung ist dabei grundsätzlich aus anderen Anwendungsfeldern bekannt und kann in geeigneter Weise übertragen werden.

Das Abliefern und/oder Abholen einer Sendung soll möglichst reibungslos erfolgen. Zudem soll vermieden werden, dass es zu einer Beschädigung des Kundenfahrzeugs kommt. Zu diesem Zweck kann die Steuervorrichtung und/oder die Fernsteuervorrichtung wenigstens eine Statusinformation an das Verteilerfahrzeug senden, wobei die wenigstens eine Statusinformation ein Entriegeln, Öffnen, Schließen und/oder Verriegeln der Verschlusseinheit freigeben, einleiten und/oder blockieren kann. Alternativ oder zusätzlich kann die wenigstens eine Statusinformation ein Verbringen der wenigstens einen Sendung in das Kundenfahrzeug und/oder das Entnehmen der wenigstens einen Sendung aus dem Kundenfahrzeug freigeben, einleiten und/oder blockieren. Eine solche Statusinformation kann beispielsweise die Information sein, dass die Verschlusseinheit des Kundenfahrzeugs entriegelt worden ist. Ist das Verteilerfahrzeug hierüber informiert, kann das Verteilerfahrzeug eine weitere Steuerinformation zum Bewirken des Öffnens der Verschlusseinheit senden, etwa wenn beide Steuerinformationen nicht gemeinsam gesendet und/oder von der Steuervorrichtung des Kundenfahrzeus nicht gemeinsam verarbeitet werden können. Die entsprechende Statusinformation kann aber auch zweckmäßig sein, wenn das Entriegeln auf andere Weise als über eine entsprechende Steuerinformation, also beispielsweise mechanisch, erfolgt. Eine Steuerinformation kann alternativ oder zusätzlich auch eine Information darüber enthalten, dass die Verschlusseinheit ordnungsgemäß geöffnet worden ist. Dann kann das Verteilerfahrzeug mit dem Abliefern oder Entnehmen der Sendung beginnen, ohne in Konflikt mit einer nicht oder nur teilweise geöffneten Verschlusseinheit zu gelangen. Zweckmäßig wäre es auch, wenn das Kundenfahrzeug das Verteilerfahrzeug über eine Statusinformation davon unterrichtet, dass das Schließen und/oder das Verriegeln der Verschlusseinheit nach dem Abliefern und/oder dem Abholen einer Sendung ordnungsgemäß geschlossen und/oder verriegelt ist. Dann kann das Verteilerfahrzeug weiterfahren, ohne dass die Verschlusseinheit des Kundenfahrzeugs wegen eines Fehlers geöffnet und/oder entriegelt bleibt. Ansonsten könnten nämlich unbefugte Personen Zugang zum Inneren des Kundenfahrzeugs erlangen. Die Statusinformationen können von der Steuervorrichtung des Kundenfahrzeugs an das Steuermittel des Verteilerfahrzeugs gesendet werden.

Eine einfache und zugleich zuverlässige Übertragung einer Information, insbesondere wenigstens einer Steuerinformation, wenigstens einer Fernsteuerinformation, wenigstens einer Fernaktivierungsinformation, wenigstens einer Statusinformation und/oder wenigstens einer Zugangsberechtigungsinformation kann über ein lokales Funknetz, etwa über Bluetooth oder Wireless Local Area Network (WLAN), und/oder über ein Mobilfunknetz, insbesondere Global System for Mobile Communication (GSM), Universal Mobile Telecommunications System (UMTS) und/oder Long Term Evolution (LTE), erfolgen. Dabei kann aufgrund der möglichen Distanz zwischen dem Verteilerfahrzeug und der Fernsteuereinrichtung ein lokales Funknetz für die Kommunikation, also die Übertragung etwa der Fernsteuerinformation und/oder der Fernaktivierungsinformation nicht ausreichend sein. Die Verwendung eines Mobilfunknetzes kann daher in diesem Fall besonders angezeigt sein. Andersherum kann die wenigstens eine Statusinformation und/oder die wenigstens eine Steuerinformation vorzugsweise über ein lokales Funknetz übertragen werden. Dies kann die Sicherheit erhöhen, da die entsprechende Information so unter Umständen nicht so leicht abgehört oder manipuliert werden kann.

Ein zuverlässigeres Abholen und/oder Abliefern von Sendungen kann bedarfsweise auch dadurch erreicht werden, dass das Verteilerfahrzeug Mittel zur Erkennung der Position, des Abstands und/oder der Ausrichtung des Kundenfahrzeugs und/oder der Verschlusseinheit des Kundenfahrzeugs umfasst. Alternativ oder zusätzlich kann so sichergestellt werden, dass das Verteilerfahrzeug überhaupt das Kundenfahrzeug findet und richtig als solches identifiziert. Ansonsten bestünde die Gefahr, dass das Verteilerfahrzeug ein anderes Fahrzeug für des Kundenfahrzeug hält. Ist das richtige Kundenfahrzeug als solches von dem Verteilerfahrzeug identifiziert bzw. erkannt, ist das Verteilerfahrzeug zudem bedarfsweise über den Abstand zum Kundenfahrzeug und die Ausrichtung des Kundenfahrzeugs informiert. Von besonderem Interesse sind dabei der Abstand und die Lage der Verschlusseinheit, die eine Öffnung des Kundenfahrzeugs verschließt, durch die eine Sendung in das Kundenfahrzeug verbracht und/oder aus dem Kundenfahrzeug entnommen werden soll. Anhand der entsprechenden Information kann das Verteilerfahrzeug gezielt seine Position zum Kundenfahrzeug ändern, bis eine geeignete, insbesondere vorbestimmte, Position relativ zum Kundenfahrzeug erreicht wird. Diese Position kann dabei insbesondere durch den Abstand und die Ausrichtung des Kundenfahrzeugs und/oder der Verschlusseinheit des Kundenfahrzeugs relativ zum Verteilerfahrzeug definiert sein. Auf die entsprechende Weise kann das Annähern des Verteilerfahrzeugs an das Kundenfahrzeug und/oder die Verschlusseinheit des Kundenfahrzeugs zuverlässig erfolgen.

Das Erkennen der Position, des Abstands und/oder der Ausrichtung des Kundenfahrzeugs und/oder der Verschlusseinheit des Kundenfahrzeugs, etwa für das Identifizieren des Kundenfahrzeugs und/oder das Annähern an das Kundenfahrzeug, kann dabei anhand wenigstens eines von dem Verteilerfahrzeug erfassbaren optischen Ortungsmittels, vorzugsweise einem Kraftfahrzeugkennzeichen, einem Barcode, oder einem computergenerierten Hologramm erfolgen. Alternativ oder zusätzlich kann einem entsprechenden Erkennen auch wenigstens ein von dem Verteilerfahrzeug auslesbares elektrisches Ortungsmittel zugrunde liegen. Dieses kann ein Radio Frequency Identification (RFID) Tag und/oder Near Field Communication (NFC) Tag sein. Es kommt bedarfsweise alternativ oder zusätzlich auch wenigstens ein vom Kundenfahrzeug ausgesendetes und vom Verteilerfahrzeug empfangbares Ortungssignal in Frage. Vorzugsweise wird dieses Ortungssignal über ein lokales Funknetz, etwa Bluetooth und/oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), gesendet.

Damit das Verteilerfahrzeug überhaupt erst erfährt, wo sich das Kundenfahrzeug grob befindet, bevor es tatsächlich vor Ort als solches erkannt und angenähert werden kann, bietet es sich an, eine entsprechende Ortsinformation bereitzustellen, die dann entsprechend verarbeitet werden kann. In diesem Zusammenhang kann es daher bevorzugt sein, wenn das Kundenfahrzeug und/oder der Fahrer zunächst entsprechende Ortsinformationen über die Position des Kundenfahrzeugs ermittelt. Dazu können beispielsweise GPS (Global Positioning System)-Informationen oder andere objektive Informationen genutzt werden. GPS-Informationen bieten sich insoweit an, als dass moderne Fahrzeuge meist auch ein Navigationssystem umfassen, das GPS-Informationen erfasst und verarbeitet. Um die Ortsinformationen weiterzuleiten, kann sich der Fahrer und/oder das Kundenfahrzeug einem lokalen Funknetz und/oder einem Mobilfunknetz bedienen. Dies ist einfach und zuverlässig möglich, wobei beispielsweise Bluetooth, Wireless Local Area Network (WLAN), Global System for Mobile Communication (GSM), Universal Mobile Telecommunications System (UMTS) und/oder Long Term Evolution (LTE) genutzt werden kann. Dabei kann die Ortsinformation bedarfsweise direkt an das Verteilerfahrzeug gesendet werden. Da aber unklar sein kann, welches Verteilerfahrzeug zuständig ist, und weil auch die Aktionen des Verteilerfahrzeugs teilweise von außen geleitet werden müssen, wird es besonders bevorzugt sein, die Ortsinformationen alternativ oder zusätzlich an eine Leiteinheit zum Leiten des Verteilerfahrzeugs, insbesondere einer Reihe von Verteilerfahrzeugen, zu senden. Dabei kommt bedarfsweise die nächstgelegene Leiteinheit in Frage. Der Begriff Leiteinheit ist dabei vorzugsweise breit zu verstehen. Die Leiteinheit kann die Tour des Verteilerfahrzeugs zumindest in gewissen Grenzen festlegen und/oder die Tour des Verteilerfahrzeugs mit anderen Verteilerfahrzeugen koordinieren. Die Leiteinheit kann alternativ oder zusätzlich auch in die Logistik der Sendungen vor ihrer Verteilung und/oder nach dem Abholen eingebunden sein. Beispielsweise kann die Leiteinheit entscheiden, welches Verteilerfahrzeug mit welchen Sendungen beladen wird, oder was mit den von einem Verteilerfahrzeug übernommenen Sendungen zu geschehen hat.

Das Verteilerfahrzeug zur Durchführung des Verfahrens weist insbesondere die zuvor und die nachfolgend im Zusammenhang mit dem Verteilerfahrzeug beschriebenen Merkmale, also etwa ein Steuermittel, ein Greifarm und wenigstens eine Sendung, auf. Aufgrund der ausführlichen Erläuterungen dieser Merkmale an anderer Stelle, ist vorliegend eine erneute Erläuterung dieser Merkmale zur Vermeidung unnötiger Wiederholungen entbehrlich.

Das Verteilersystem weist neben wenigstens einem Verteilerfahrzeug noch wenigstens eine Fernsteuervorrichtung und/oder wenigstens eine Leiteinheit auf. Die Leiteinheit und/oder die Fernsteuervorrichtung stehen dabei wie zuvor bereits beschrieben in Kontakt mit dem Verteilerfahrzeug. Die Fernsteuervorrichtung kann dabei eine Fernsteuerinformation empfangen und diese verarbeiten, um infolge dessen eine Fernaktivierungsinformation an ein Kundenfahrzeug zu senden. Dazu können sich die Fernsteuervorrichtung und das Verteilerfahrzeug vorzugsweise eines Mobilfunknetzes bedienen. Die Fernsteuervorrichtung kann alternativ oder zusätzlich aber auch dazu ausgebildet sein, Statusinformationen von einem Kundenfahrzeug zu empfangen und diese Statusinformationen an das Verteilerfahrzeug weiterzuleiten. Auch zu diesem Zweck können sich die Fernsteuervorrichtung und das Verteilerfahrzeug eines Mobilfunknetzes bedienen. Die Leiteinheit kann Ortsinformationen erhalten und, bedarfsweise nach einem Verarbeiten derselben, an das Verteilerfahrzeug weiterleiten. Das Verteilerfahrzeug kann von der Leiteinheit alternativ oder zusätzlich auch Informationen über eine Reihenfolge von abzufahrenden Orten oder dergleichen erhalten. Die Leiteinheit kann so eine Tour des Verteilerfahrzeugs wenigstens teilweise vorgeben. Die Leiteinheit kann bedarfsweise zum Leiten und/oder Koordinieren des Verteilerfahrzeugs, insbesondere einer Reihe von Verteilerfahrzeugen, vorgesehen sein. Die Leiteinheit kann alternativ oder zusätzlich auch in die Logistik der Sendungen vor ihrer Verteilung und/oder nach dem Abholen eingebunden sein. Beispielsweise kann die Leiteinheit entscheiden, welches Verteilerfahrzeug mit welchen Sendungen beladen wird, oder was mit den von einem Verteilerfahrzeug übernommenen Sendungen zu geschehen hat. Die Leiteinheit und/oder das wenigstens eine Verteilerfahrzeug können sich ebenfalls zum Zwecke der Kommunikation bedarfsweise eines Mobilfunknetzes bedienen.

Nachfolgend wird die Erfindung anhand einer lediglich ein Ausführungsbeispiel darstellenden Zeichnung näher erläutert. In der Zeichnung zeigt
- Fig. 1: das erfindungsgemäße Verfahren in einer schematischen Übersichtsdarstellung,
- Fig. 2A-H: einzelne Verfahrensschritte des Verfahrens gemäß Fig. 1 in schematischer Darstellung und
- Fig. 3: das Verfahren gemäß Fig. 1 in schematischer Fließbilddarstellung.

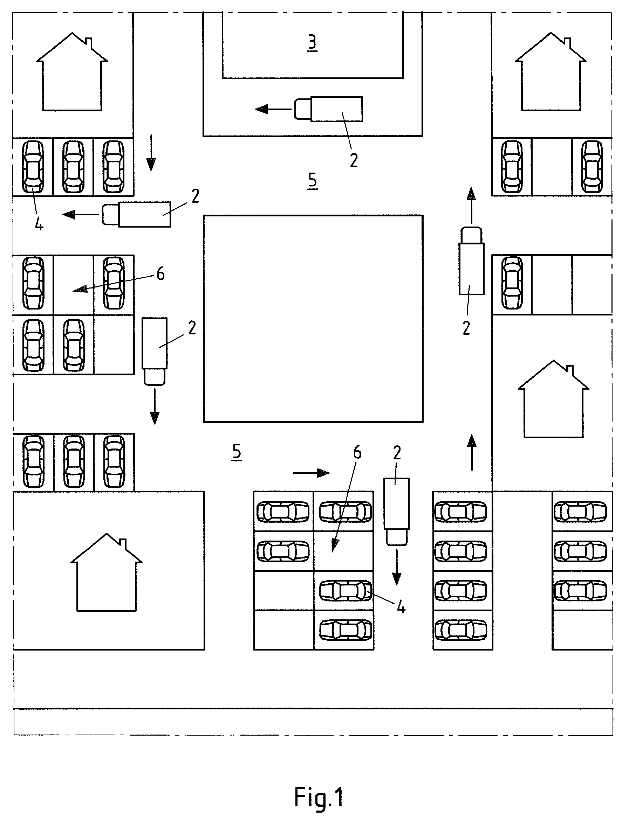

In der Fig. 1 ist ein Verfahren zum autonomen Abliefern und/oder Abholen wenigstens einer Sendung 1 mit wenigstens einem Verteilerfahrzeug 2 dargestellt. Das Verteilerfahrzeug 2 wird in einem Logistikzentrum 3 mit personenbezogenen Sendungen 1 beladen, die für unterschiedliche Personen bestimmt sind. Das Verteilerfahrzeug 2 bekommt Informationen über die Orte, an denen die Sendungen 1 übergeben werden sollen. Zudem erhält das Verteilerfahrzeug 2 Informationen darüber, an welchen Orten Sendungen 1 abzuholen sind. Die Orte, an denen die Übergabe oder das Abholen von Sendungen 1 erfolgen soll, können wenigstens teilweise Kundenfahrzeuge 4 sein. Die Informationen über die einzelnen Orte können alle in dem Logistikzentrum 3 an das Verteilerfahrzeug 2 übermittelt werden. Es kann aber auch vorgesehen sein, dass diese Informationen sukzessive nach dem Verlassen des Logistikzentrums 3 an das Verteilerfahrzeug 2 gesendet werden. Dabei kann das Verteilerfahrzeug 2 selbstständig seine Tour zusammenstellen oder aber eine Tour von dem Logistikzentrum 3 angewiesen bekommen.

Das beladene Verteilerfahrzeug 2 fährt von dem Logistikzentrum 3 autonom, also ohne Eingriff eines Fahrers, über öffentliche Straßen 5 bzw. durch den öffentlichen Straßenverkehr zu einem Kundenfahrzeug 4, das auf einem Parkplatz 6 abgestellt ist. Das Verteilerfahrzeug 2 ist dabei so ausgebildet, dass es alternativ auch konventionell von einem Fahrer gefahren werden könnte, dies ist jedoch nicht erforderlich. Den ungefähren Ort des Kundenfahrzeugs 4 bekommt das Verteilerfahrzeug 2 mitgeteilt, dem sich das Verteilerfahrzeug 2 autonom annähert.

Auf dem Parkplatz 6 sucht das Verteilerfahrzeug 2 nun gezielt nach dem Kundenfahrzeug 4, das das Verteilerfahrzeug 2 beispielsweise anhand des Kraftfahrzeugkennzeichens oder eines anderen speziellen Ortungsmittels 7 erkennt und identifiziert. Danach nähert sich das Verteilerfahrzeug 2 dem Kundenfahrzeug 4 weiter an, und zwar in einer Weise, dass der Abstand und die relative Ausrichtung zwischen dem Kundenfahrzeug 4 und dem Verteilerfahrzeug 2 in einem vorbestimmten Rahmen liegen. Dies stellt sicher, dass die Übergabe der Sendung 1 durch das Verteilerfahrzeug 2 in das Kundenfahrzeug 4 problemlos bewerkstelligt werden kann. Sodann kann das Verteilerfahrzeug 2 das Öffnen einer Verschlusseinheit 8 in Form einer Tür des Kundenfahrzeugs 4 bewirken, durch die das Verteilerfahrzeug 2 die Sendung 1 in das Kundenfahrzeug 4 legen kann. Anschließend bewirkt das Verteilerfahrzeug 2 das Schließen und Verriegeln der Verschlusseinheit 8 in Form der Tür und verlässt das Kundenfahrzeug 4 beispielsweise in Richtung eines Hauses, einer Wohnung oder eines weiteren Kundenfahrzeugs 4. Dort erfolgt dasselbe Vorgehen oder es wird nach dem Öffnen der Verschlusseinheit 8 und vor dem erneuten Schließen der Verschlusseinheit 8 eine Sendung aus dem Kundenfahrzeug 4 entnommen. Diese Sendung 1 kann dann im Verteilerfahrzeug 2 aufgenommen bleiben, bis das Verteilerfahrzeug 2 zum Ende seiner Tour wieder zum Logistikzentrum 3 gelangt. Dort kann die Sendung 1 dann ausgeladen und weiterverteilt werden.

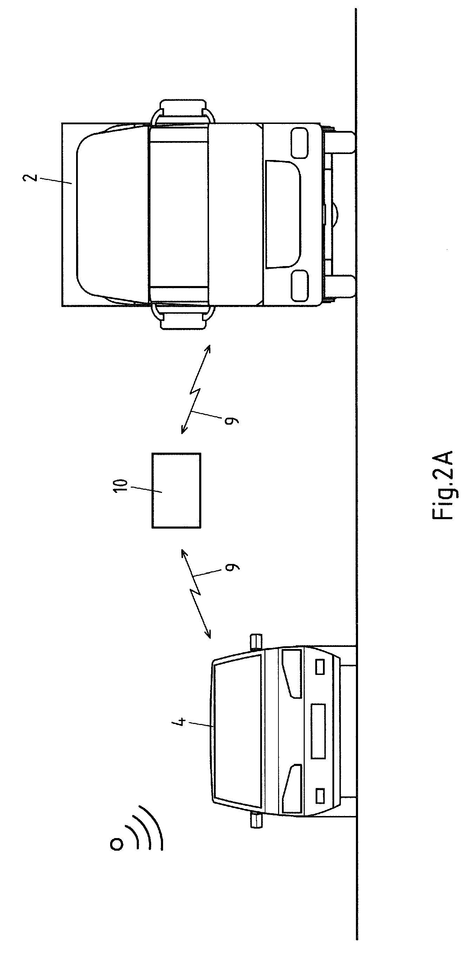

Ein Teil des zuvor beschriebenen Verfahrens wird nachfolgend anhand der Fig. 2A bis 2H näher erläutert. In einem ersten Schritt, der in der Fig. 2A veranschaulicht ist, ermittelt das Kundenfahrzeug 4 seine Position mit Hilfe von GPS (Global Positioning System)-Informationen 9. Diese GPS-Informationen 9 oder bereits aufbereitete Informationen übersendet das Kundenfahrzeug 4 sodann an eine Leiteinheit 10, die das Verteilerfahrzeug 2 zum Kundenfahrzeug 4 leitet. Die Leiteinheit 10 sendet daraufhin weitere Informationen zur Position des Kundenfahrzeugs 4 an das Verteilerfahrzeug 2, damit das Verteilerfahrzeug 2 das Kundenfahrzeug 4 autonom anfahren kann. In dem Beispielfall befindet sich das Kundenfahrzeug 4 auf einem Parkplatz 6 mit beschränktem Zugang. Es kann sich dabei beispielsweise um eine öffentliche Tiefgarage oder einen Firmenparkplatz handeln.

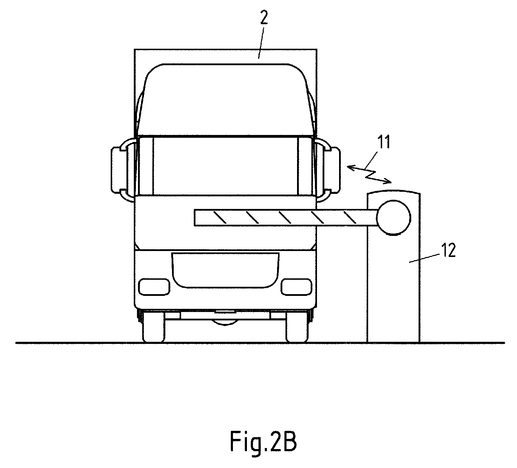

Damit das Verteilerfahrzeug 2 auf diesen Parkplatz 6 gelangen kann, muss das Verteilerfahrzeug 2, wie dies in Fig. 2B veranschaulicht ist, zunächst seine Zugangsberechtigung nachweisen. Dazu kann das Verteilerfahrzeug 2 eine Zugangsberechtigung bzw. eine Zugangsberechtigungsinformation 11 an eine Schranke oder ein anderes den Zugang freigebendes und/oder blockierendes Zugangskontrollmittel 12 senden. Die Zugangsberechtigung wird dem Verteilerfahrzeug 2 vorzugsweise von dem Kunden übermittelt, obwohl hierzu auch verschiedene Alternativen denkbar sind. Im vorliegenden Beispielspielfall öffnet sich infolge des Empfangs und der Verarbeitung der Informationen betreffend die Zugangsberechtigung die Schranke. Das Verteilerfahrzeug 2 fährt sodann auf den Parkplatz 6, und zwar dorthin, wo das Verteilerfahrzeug 2 das Kundenfahrzeug 4 vermutet.

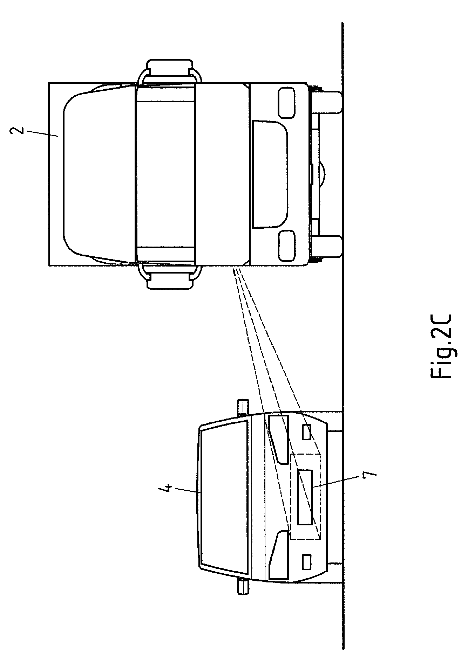

Die dem Verteilerfahrzeug 2 bekannte ungefähre Position des Kundenfahrzeugs 4 muss nicht ausreichen, um das Kundenfahrzeug 4 auf einem Parkplatz 6 mit einer Vielzahl von geparkten Fahrzeugen zu identifizieren. Dies liegt beispielsweise daran, dass das Kundenfahrzeug 4 zwischenzeitlich weggefahren ist oder dass die bekannten GPS-Informationen 8 zu ungenau sind. Das Verteilerfahrzeug 2 scannt nun optisch, die Ortungsmittel 7 in Form von Kraftfahrzeugkennzeichen der in Frage kommenden, geparkten Fahrzeuge, bis das Verteilerfahrzeug 2 das Kundenfahrzeug 4 anhand des bekannten Kraftfahrzeugkennzeichens identifiziert. Dies ist schematisch in der Fig. 2C dargestellt. Bedarfsweise kann auch ein anderes Ortungsmittel 7, bedarfsweise auch auf andere Weise als optisch, erfasst werden. Wenn klar ist, in welches Kundenfahrzeug 4 die Sendung 1 abgelegt werden soll, nähert sich das Verteilerfahrzeug 2 dem Kundenfahrzeug 4 weiter an. Während dies geschieht, ermittelt das Verteilerfahrzeug 2 den Abstand zum Kundenfahrzeug 4 und/oder die relative Position des Kundenfahrzeugs 4 zum Verteilerfahrzeug 2. Auf der Basis dieser Informationen bringt sich das Verteilerfahrzeug 2 in eine Position gegenüber dem Kundenfahrzeug 4, aus der heraus die Übergabe der Sendung 1 erfolgen kann. Dem Verteilerfahrzeug 2 ist dabei bekannt, welche Anforderungen an diese entsprechende Position gestellt werden.

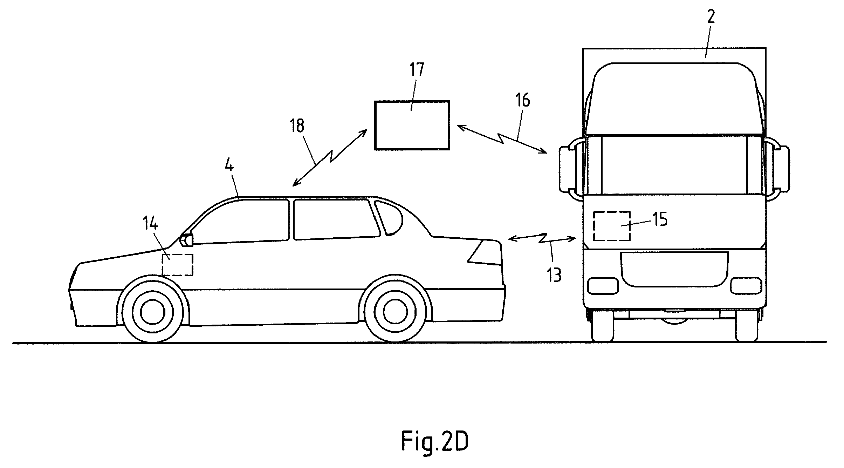

In einem nächsten Schritt, der in der Fig. 2D dargestellt ist, wird von dem Verteilerfahrzeug 2 das Entriegeln und Öffnen einer Verschlusseinheit 8 in Form einer Tür des Kundenfahrzeugs 4, im Sinne eines Kofferraumdeckels oder einer Heckklappe, bewirkt. Dazu kann das Verteilerfahrzeug 2 entweder eine Steuerinformation 13 an eine Steuervorrichtung 14 des Kundenfahrzeugs 4 senden, wozu das Verteilerfahrzeug 2 Steuermittel 15 aufweist. Die Steuermittel 15 können aber auch genutzt werden, um eine Fernsteuerinformation 16 an eine Fernsteuervorrichtung 17 zu senden, die nach dem Empfang und der Verarbeitung der Fernsteuerinformation 16 eine Fernaktivierungsinformation 18 an die Steuervorrichtung 14 des Kundenfahrzeugs 4 sendet. Über die Fernaktivierungsinformation 18 oder die Steuerinformation 13, die in der Steuervorrichtung 14 des Kundenfahrzeugs 4 empfangen und verarbeitet wird, bewirkt das Verteilerfahrzeug 2 das Entriegeln und das Öffnen der Verschlusseinheit 8. Dabei steuert dann die Steuervorrichtung 14 des Kundenfahrzeugs 4 bedarfsweise die entsprechenden Aktuatoren, wie beispielsweise Elektromotoren, um das Entriegeln und das Öffnen der Verschlusseinheit 8 herbeizuführen.

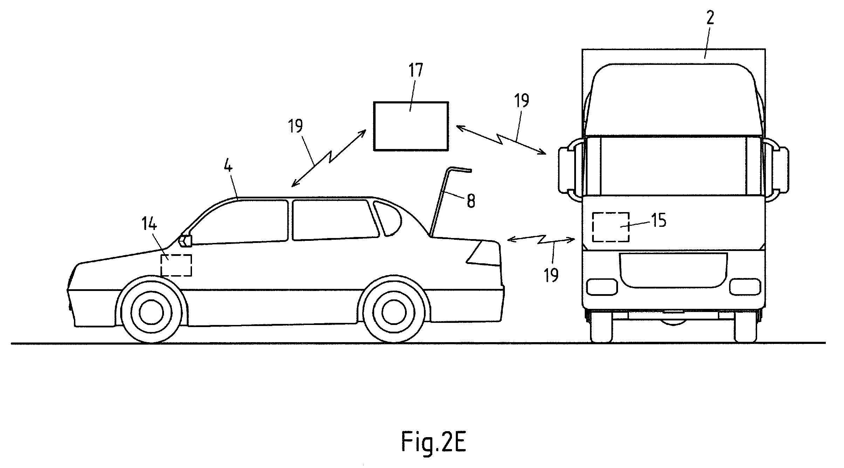

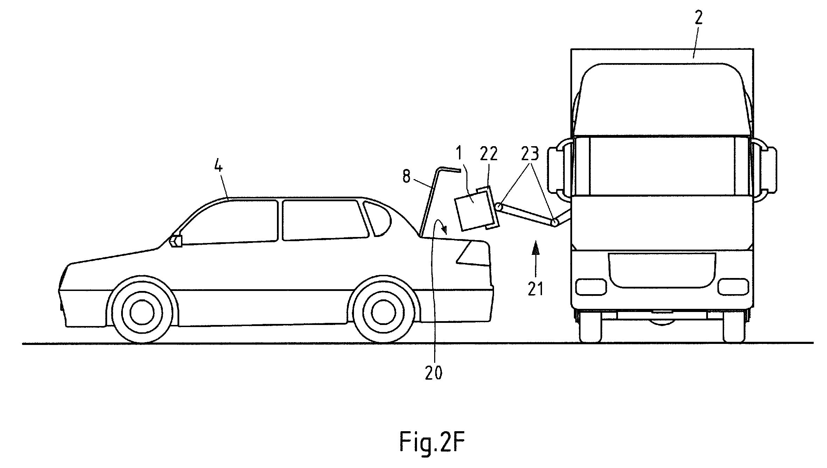

Wie dies in der Fig. 2E dargestellt ist, sendet die Steuervorrichtung 14 beim vorliegenden Verfahrensbeispiel entweder direkt oder indirekt über die Fernsteuervorrichtung 17 eine Statusinformation 19 an das Verteilerfahrzeug 2, insbesondere an das Steuermittel 15 des Verteilerfahrzeugs 2. Im Fall der indirekten Sendung der Statusinformation 19 leitet die Fernsteuervorrichtung 17 die Statusinformation 19 an das Verteilerfahrzeug 2 weiter. Die Statusinformation 19 teilt dem Verteilerfahrzeug 2 mit, dass die Verschlusseinheit 8 ordnungsgemäß geöffnet worden ist. Nunmehr kann also das Einlegen der Sendung 1 durch die durch die geöffnete Verschlusseinheit 8, genauer Tür, insbesondere Kofferraumdeckel oder Heckklappe, freigegebene Öffnung in das Kundenfahrzeug 4, vorliegend in den Kofferraum 20, erfolgen. Dies erfolgt gemäß Fig. 2F mit Hilfe einer Transporteinheit 21 in Form eines Greifarms, der einen Greifabschnitt 22 zum Ergreifen der Sendung 1 umfasst. Die Transporteinheit 21 in Form des Greifarms umfasst zudem mehrere Gelenke 23, die dem Greifarm die nötige Gelenkigkeit geben, um stets zuverlässig und ohne Beschädigung des Kundenfahrzeugs 4 durch die geöffnete Verschlusseinheit 8 in das Kundenfahrzeug 4 eingreifen zu können. Der Greifabschnitt 22 funktioniert dabei ähnlich einer Hand, so dass bedarfsweise auch eine im Kundenfahrzeug 4 bereitgehaltene Sendung 1 von dem Greifabschnitt 22 ergriffen und durch die geöffnete Verschlusseinheit 8 aus dem Fahrzeug entnommen und in das Verteilerfahrzeug 2 verbracht werden kann.

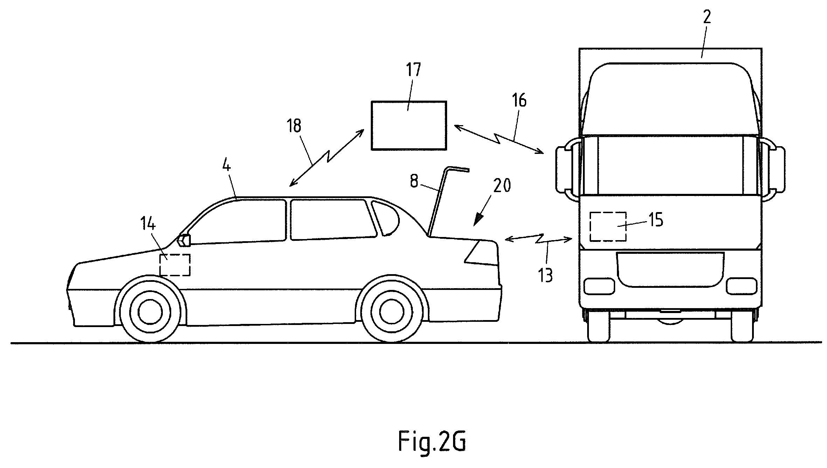

Nach dem Verbringen der Sendung 1 in das Kundenfahrzeug 4 sendet das Verteilerfahrzeug 2, wie dies in der Fig. 2G dargestellt ist, über das Steuermittel 15 eine weitere Steuerinformation 13 an die Steuervorrichtung 14 des Kundenfahrzeugs 4. Alternativ kann das Steuermittel 15 eine Fernsteuerinformation 16 an die Fernsteuervorrichtung 17 senden. Die Fernsteuervorrichtung 17 sendet nach dem Empfangen und Verarbeiten der Fernsteuerinformation 16 eine Fernaktivierungsinformation 18 an die Steuervorrichtung 14 des Kundenfahrzeugs 4.

Auf beide Weisen werden das Schließen und das Verriegeln der geöffneten Verschlusseinheit 8 des Kundenfahrzeugs 4 bewirkt. Die Steuervorrichtung 14 des Kundenfahrzeugs 4 steuert nach dem Empfang und der Verarbeitung der Steuerinformation 13 oder der Fernaktivierungsinformation 18 Aktuatoren, etwa Elektromotoren, des Kundenfahrzeugs 4, welche für das Schließen und das Verriegeln der Verschlusseinheit 8 sorgen.

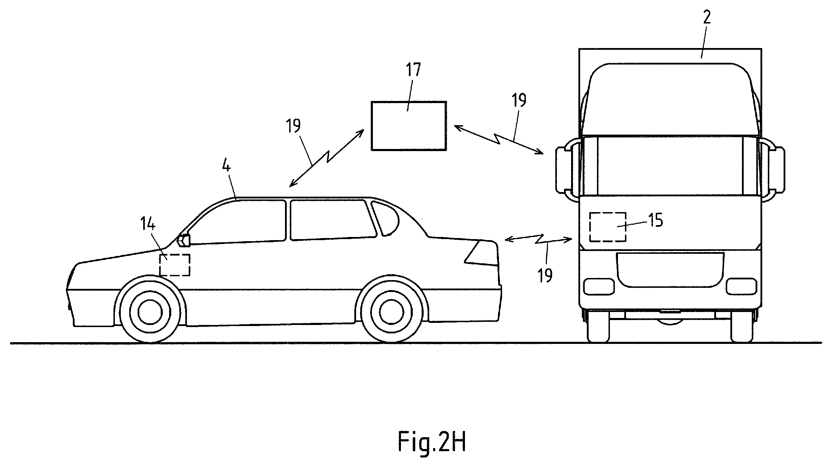

Ist dies erfolgt, sendet die Steuervorrichtung 14 des Kundenfahrzeugs 4 eine Statusinformation 19 an das Verteilerfahrzeug 2, wie dies in der Fig. 2H dargestellt ist. Dies kann entweder direkt geschehen oder indirekt über die Fernsteuervorrichtung 14, die die Statusinformation 19 an das Verteilerfahrzeug 2 weiterleitet. Die Statusinformation 19 teilt dem Verteilerfahrzeug 2 mit, dass das Schließen und das Verriegeln der Verschlusseinheit 8 erfolgreich abgeschlossen ist. Damit gilt das Verbringen der Sendung 1 in das Kundenfahrzeug 4 für das Verteilerfahrzeug 2 als abgeschlossen. Das Verteilerfahrzeug 2 fährt daraufhin zum nächsten Kundenfahrzeug 4, um in dieses eine Sendung 1 zu verbringen und/oder aus diesem eine Sendung 1 zu entnehmen. Prinzipiell werden dieselben Verfahrensschritte durchgeführt, die zuvor beschrieben sind. In einzelnen oder mehreren Punkten können jedoch auch Unterschiede bestehen.

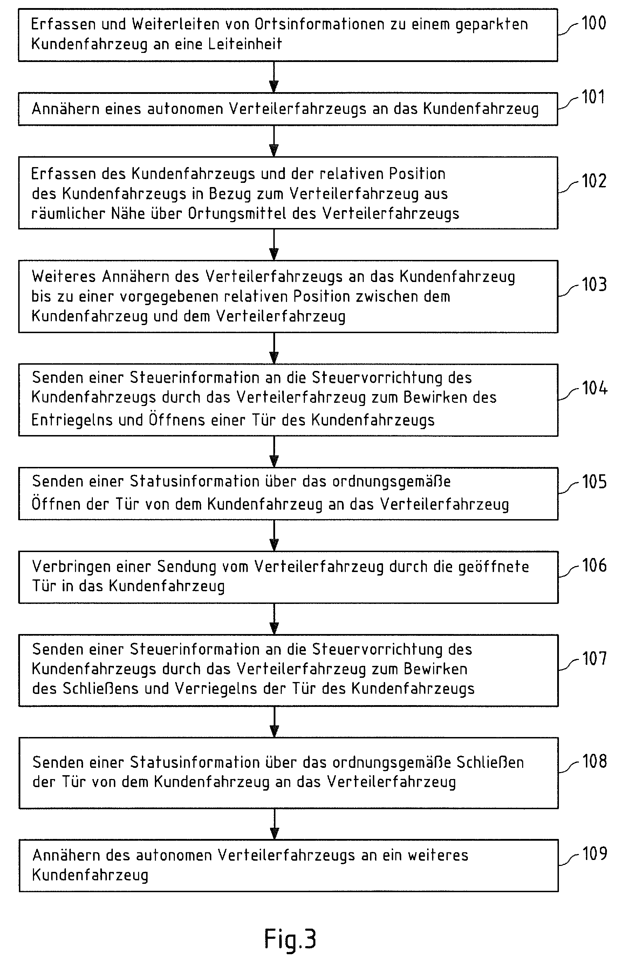

In der Fig. 3 ist das Verfahren erneut schematisch und grundlegend als Fließbild erläutert. In einem ersten Schritt 100 erfasst das Kundenfahrzeug oder ein Kunde eine Ortsinformation des geparkten Kundenfahrzeugs und gibt diese an eine Leiteinheit weiter. Anhand dieser Ortsinformation nähert sich das Verteilerfahrzeug in einem nachfolgenden Schritt 101 dem Kundenfahrzeug an, wobei sich das Verteilerfahrzeug autonom bewegt, und zwar auch durch den öffentlichen Straßenverkehr, wobei das Verteilerfahrzeug öffentliche Straßen benutzt.

In der Nähe des Kundenfahrzeugs angekommen, erfasst das Verteilerfahrzeug in einem weiteren Schritt 102 das gesuchte Kundenfahrzeug etwa anhand des Kraftfahrzeugkennzeichens. Ferner wird die relative Position des Kundenfahrzeugs bezogen auf das Verteilerfahrzeug vom Verteilerfahrzeug erfasst. Anhand dieser Daten nähert sich das Verteilerfahrzeug dem Kundenfahrzeug im nächsten Schritt 103 weiter an, bis das Verteilerfahrzeug günstig zum Kundenfahrzeug positioniert ist.

Ist diese relative Position des Verteilerfahrzeugs erreicht, sendet das Verteilerfahrzeug mittels eines Steuermittels im darauffolgenden Schritt 104 eine Steuerinformation an eine Steuervorrichtung des Kundenfahrzeugs, die bewirkt, dass eine Verschlusseinheit, insbesondere eine Tür, wie etwa, Hecktür, insbesondere Kofferraumdeckel oder Heckklappe, Seitentür oder dergleichen des Kundenfahrzeugs, entriegelt und geöffnet wird, und zwar insbesondere von dem Kundenfahrzeug selbst.

Über das ordnungsgemäße Öffnen der Verschlusseinheit wird das Verteilerfahrzeug im nächsten Schritt 105 von dem Kundenfahrzeug mittels einer weitergeleiteten Statusinformation unterrichtet. Dies veranlasst das Verteilerfahrzeug im darauffolgenden Schritt 106 dazu, eine im Verteilerfahrzeug angeordnete Sendung mit einem Greifabschnitt eines Greifarms zu ergreifen und durch die nun freigegeben Öffnung, insbesondere durch die geöffnete Verschlusseinheit des Kundenfahrzeugs in das Kundenfahrzeug zu legen. Alternativ oder zusätzlich kann der Greifabschnitt des Greifarms aber auch eine im Kundenfahrzeug bereitgehaltene Sendung entnehmen und die Sendung durch die nun freigegeben Öffnung, insbesondere durch die geöffnete Verschlusseinheit, in das Verteilerfahrzeug verbringen.

Sodann sendet das Steuermittel des Verteilerfahrzeugs in einem weiteren Schritt 107 eine Steuerinformation an die Steuervorrichtung des Kundenfahrzeugs. Die Steuerinformation bewirkt infolge des Empfangs und der Verarbeitung der Steuerinformation durch die Steuervorrichtung das Schließen und Verriegeln der zuvor geöffneten Verschlusseinheit des Kundenfahrzeugs.

Die Steuervorrichtung des Kundenfahrzeugs sendet im Gegenzug im nächsten Schritt 108 erneut eine Statusinformation an das Steuermittel des Verteilerfahrzeugs. Die Statusinformation signalisiert dem Verteilerfahrzeug, dass das im Zusammenhang mit diesem Kundenfahrzeug stehende Verfahren abgeschlossen ist und sich das Verteilerfahrzeug in einem darauffolgenden Schritt 109 wiederum autonom und wenigstens teilweise über den öffentlichen Straßenverkehr einem weiteren Kundenfahrzeug annähern kann, was das Verteilerfahrzeug beim vorliegenden Verfahrensbeispiel auch tut.

## Patentansprüche

1. Verfahren zum autonomen Abliefern und/oder Abholen wenigstens einer Sendung (1) mit wenigstens einem Verteilerfahrzeug (2),
- bei dem ein Verteilerfahrzeug (2) wenigstens teilweise autonom und wenigstens teilweise über den öffentlichen Straßenverkehr (5) an ein Kundenfahrzeug (4) heranfährt,
- bei dem das Verteilerfahrzeug (2) wenigstens teilweise autonom das Öffnen einer Verschlusseinheit (8) des Kundenfahrzeugs (4) bewirkt,
- bei dem das Verteilerfahrzeug (2) bei geöffneter Verschlusseinheit (8) wenigstens teilweise autonom eine Sendung (1) in das Kundenfahrzeug (4) verbringt und/oder wenigstens teilweise autonom eine Sendung (1) aus dem Kundenfahrzeug (4) entnimmt,
- bei dem das Verteilerfahrzeug nach dem Verbringen und/oder Entnehmen der Sendung wenigstens teilweise autonom das Schließen der Verschlusseinheit (8) des Kundenfahrzeugs bewirkt.

2. Verfahren nach Anspruch 1,
- bei dem das Verteilerfahrzeug (2) nach dem Schließen der Verschlusseinheit (8) wenigstens teilweise autonom und wenigstens teilweise über den öffentlichen Straßenverkehr (5) zu einem weiteren Kundenfahrzeug (4) fährt und
- bei dem das Verteilerfahrzeug (2) wenigstens teilweise autonom eine Sendung (1) in das weitere Kundenfahrzeug (4) verbringt und/oder aus dem weiteren Kundenfahrzeug (4) entnimmt.

3. Verfahren nach Anspruch 1 oder 2,
- bei dem das Verteilerfahrzeug (2) vor dem Öffnen der Verschlusseinheit (8) des Kundenfahrzeugs (4) wenigstens teilweise autonom das Entriegeln und/oder nach dem Schließen der Verschlusseinheit (8) des Kundenfahrzeugs (4) das Verriegeln der Verschlusseinheit (8) bewirkt.

4. Verfahren nach einem der Ansprüche 1 bis 3,
bei dem wenigstens eine Sendung (1) mit Hilfe einer Transporteinheit (21), vorzugsweise in Form eines Greifarms, insbesondere umfassend einen Greifabschnitt (22) zum Ergreifen wenigstens einer Sendung (1), in das Kundenfahrzeug (4) verbracht und/oder aus dem Kundenfahrzeug (4) entnommen wird.

5. Verfahren nach einem der Ansprüche 1 bis 4,
- bei dem das wenigstens eine Kundenfahrzeug (4) auf einem Parkplatz, (6) vorzugsweise öffentlichen Parkplatz, Kundenparkplatz und/oder Firmenparkplatz, abgestellt ist und, vorzugsweise,
- bei dem das Verteilerfahrzeug (2) über eine Zugangsberechtigung (12) und ein Zugangsbewirkungsmittel zum Bewirken des Zugangs zu dem Parkplatz (6) verfügt.

6. Verfahren nach einem der Ansprüche 1 bis 5,
- bei dem das Verteilerfahrzeug (2) wenigstens eine Steuerinformation (13) an eine Steuervorrichtung (14) des Kundenfahrzeugs (4) sendet und
- bei dem die Steuervorrichtung (14) des Kundenfahrzeugs (4) infolge des Empfangs und der Verarbeitung der wenigstens einen Steuerinformation (13) ein Entriegeln, Öffnen, Schließen und/oder Verriegeln der Verschlusseinheit (8) bewirkt.

7. Verfahren nach einem der Ansprüche 1 bis 6,
- bei dem eine Bedieneinheit zum Bedienen der Verschlusseinheit (8) in Kontakt mit der Verschlusseinheit (8) des Kundenfahrzeugs (4) gebracht wird und
- bei dem die Bedieneinheit beispielsweise durch den Kontakt mit der Verschlusseinheit (8) das Entriegeln, Öffnen, Schließen und/oder Verriegeln der Verschlusseinheit (8) bewirkt.

8. Verfahren nach einem der Ansprüche 1 bis 7,
- bei dem das Verteilerfahrzeug (2) wenigstens eine Fernsteuerinformation (16) an eine, vorzugsweise die Steuervorrichtungen (14) einer Vielzahl von Fahrzeugen fernsteuernde, Fernsteuervorrichtung (17) sendet,
- bei dem die Fernsteuervorrichtung (17) infolge des Empfangs und der Verarbeitung der wenigstens einen Fernsteuerinformation (16) wenigstens eine Fernaktivierungsinformation (18) an die Steuervorrichtung (14) des Kundenfahrzeugs (4) sendet und
- bei dem die Steuervorrichtung (14) des Kundenfahrzeugs (4) infolge des Empfangs und der Verarbeitung der wenigstens einen Fernaktivierungsinformation (16) ein Entriegeln, Öffnen, Schließen und/oder Verriegeln der Verschlusseinheit (8) bewirkt.

9. Verfahren nach Anspruch 8,
- bei dem die Fernsteuervorrichtung (17) anhand der Fernsteuerinformation (16) und/oder die Steuervorrichtung (14) anhand der Steuerinformation (13) und/oder der Fernaktivierungsinformation (18) eine Berechtigungsprüfung durchführt und
- bei dem die Steuervorrichtung (14) des Kundenfahrzeugs (4) bei erfolgreicher Berechtigungsprüfung ein Entriegeln, Öffnen, Schließen und/oder Verriegeln der Verschlusseinheit (8) bewirkt.

10. Verfahren nach einem der Ansprüche 6 bis 9,
- bei dem die Steuervorrichtung (14) und/oder die Fernsteuervorrichtung (17) wenigstes eine Statusinformation (19) an das Verteilerfahrzeug (2) sendet und
- bei dem die wenigstens eine Statusinformation (19) ein Entriegeln, Öffnen, Schließen und/oder Verriegeln der Verschlusseinheit (8) freigibt und/oder blockiert und/oder
- bei dem die wenigstens eine Statusinformation (13) ein Verbringen der wenigstens einen Sendung (1) in das Kundenfahrzeug (4) und/oder das Entnehmen der wenigstens einen Sendung (1) aus dem Kundenfahrzeug (4) freigibt, einleitet und/oder blockiert.

11. Verfahren nach einem der Ansprüche 6 bis 10,
bei dem die wenigstens eine Steuerinformation (13), die wenigstens eine Fernsteuerinformation(16), die wenigstens eine Fernaktivierungsinformation (18), die wenigstens eine Statusinformation (19) und/oder eine Zugangsberechtigungsinformation (11) über Bluetooth, Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), gesendet wird.

12. Verfahren nach einem der Ansprüche 1 bis 11,
bei dem das Verteilerfahrzeug (2) Mittel zur Erkennung der Position, des Abstands und/oder der Ausrichtung des Kundenfahrzeugs (4) und/oder der Verschlusseinheit des Kundenfahrzeugs (4) anhand wenigstens eines von dem Verteilerfahrzeug (2) erfassbaren optischen Ortungsmittels (7), vorzugsweise Kraftfahrzeugkennzeichen, Barcode, computergeneriertes Hologramm, und/oder anhand wenigstens eines von dem Verteilerfahrzeug (2) auslesbaren elektrischen Ortungsmittels (7), vorzugsweise Radio Frequency Identification (RFID) Tag und/oder Near Field Communication (NFC) Tag und/oder anhand wenigstens eines vom Kundenfahrzeug (4) ausgesendeten und von dem Verteilerfahrzeug (2) empfangbaren Ortungssignals, vorzugsweise gesendet über ein lokales Funknetz, etwa Bluetooth und/oder Wireless Local Area Network (WLAN), und/oder ein Mobilfunknetz, insbesondere Global System for Mobile Communication (GSM), Universal Mobile Telecommunications System (UMTS) und/oder Long Term Evolution (LTE), aufweist.

13. Verfahren nach einem der Ansprüche 1 bis 12,
- bei dem das Verteilerfahrzeug (2) mit Hilfe eines Abstandssensors, vorzugsweise anhand des wenigstens einen Ortungsmittels (7) und/oder des wenigstens einen Ortungssignals, die relative Position des Verteilerfahrzeugs (2) zum Kundenfahrzeug (4) und/oder zur Verschlusseinheit (8) des Kundenfahrzeugs (4) ermittelt und, vorzugsweise,
- bei dem das Verteilerfahrzeug (2) durch eine Abstandssteuervorrichtung abhängig von der relativen Position des Verteilerfahrzeugs (2) zum Kundenfahrzeug (4) und/oder zur Verschlusseinheit (8) des Kundenfahrzeugs (4) in vorbestimmter Weise an das Kundenfahrzeug (4) und/oder zur Verschlusseinheit (8) des Kundenfahrzeugs (4) angenähert wird.

14. Verfahren nach einem der Ansprüche 1 bis 13,
bei dem das Kundenfahrzeug (4) und/oder der Fahrer Ortsinformationen, insbesondere GPS-Informationen (9), über die Position des Kundenfahrzeugs (4) ermittelt und die Ortsinformationen, vorzugsweise über Bluetooth, Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), an das Verteilerfahrzeug (2) und/oder eine Leiteinheit (10) zum Leiten des Verteilerfahrzeugs (2) wenigstens in die Nähe des Kundenfahrzeugs (4) sendet.

15. Verteilerfahrzeug (2) zur Durchführung des Verfahrens nach einem der Ansprüche 1 bis 14.

16. Verteilersystem zur Durchführung des Verfahrens nach einem der Ansprüche 1 bis 14 umfassend wenigstens ein Verteilerfahrzeug (2) nach Anspruch 15 und wenigstens eine Fernsteuervorrichtung (17) und/oder eine Leiteinheit (10).
